# DEMANDE DE BREVET EUROPEEN

(11) **EP 0 989 698 A1**
(43) Date de publication de la demande: **29.03.2000**
(21) Numéro de dépôt: 99410106.1
(22) Date de dépôt: 01.09.1999
(51) Int. Cl.: H04L 1/08

(54) **Dispositif et procédé de communication à correction d'erreurs par logique majoritaire**

(30) Priorité: 23.09.1998 FR 9812052
(71) Demandeur: Schneider Electric Industries SA, 92500 Rueil-Malmaison (FR)
(72) Inventeur: Andre, Philippe, 38050 Grenoble cedex 09 (FR)
(74) Mandataire: Jouvray, Marie-Andrée

(57) **Abrégé**

Dans le dispositif et le procédé de communication, un récepteur (2) reçoit un groupe de trames redondantes (36) en codage ligne différentiel (étape 52). Les trames redondantes (36) reçues comportent un nombre prédéterminé de bits identiques. Les bits valides sont utilisés pour déterminer des bits d'information (étape 54) en fonction des valeurs des bits valides de rangs identiques.

## Description

L'invention concerne un dispositif de communication à correction d'erreurs comportant des moyens de réception susceptibles de recevoir des trames dont les bits d'information sont constitués de signaux à codage ligne différentiel, et des moyens de décodage connectés aux moyens de réception pour décoder lesdites trames de signaux. L'invention concerne aussi un procédé de communication entre des moyens d'émission et des moyens de réception.

Les dispositifs de communication connus comportent généralement des moyens de codage et d'émission pour envoyer des trames de bits d'information. Ces trames sont reçues par des récepteurs qui décodent les signaux de manière à extraire les valeurs de bits d'information.

Lorsque les signaux véhiculant les trames sont utilisés dans un environnement perturbé, il est possible que des bits d'information soient endommagés et que la trame reçue soit fausse ou erronée. Ces perturbations sont particulièrement présentes lorsque les liaisons entre les émetteurs et les récepteurs se font par ondes radio.

Pour éviter ou diminuer le taux de trames perturbées, il existe des moyens de codage de trames qui permettent de détecter les erreurs et même de les corriger. Ces modes de codage connus fonctionnent selon des matrices comportant des bits de correction. Les plus connus sont, par exemple, les codages : Hamming, BCH ou Reed-Solomon.

Cependant, ces modes de codages connus nécessitent, de la part des émetteurs et des récepteurs de signaux, des moyens de décodages complexes. Mais, ces codages de l'état de la technique ne sont pas adaptés à des dispositifs de communication ayant des capacités de calcul très limitées.

L'invention a pour but un dispositif et un procédé de communication à correction d'erreur pouvant fonctionner avec des décodeurs ayant de faibles capacités de calcul.

Dans un dispositif selon l'invention, les trames sont groupées par groupes de trames redondantes comportant un nombre prédéterminé de trames dans lesquelles un nombre prédéterminé de bits sont identiques, et le dispositif comporte des moyens d'identification pour identifier des bits d'information valides par détection de variation de signal et des moyens de détermination pour déterminer les valeurs des bits d'information en fonction des valeurs des bits d'information valides de rang identique.

De préférence, les valeurs des bits d'information ont les valeurs majoritaires des bits d'information valides de chaque rang. Ces valeurs des bits d'information peuvent être utilisés pour reconstituer les bits d'une trame de réception.

Dans un mode de réalisation préférentiel, la valeur d'un bit est définie par le sens de variation d'un signal codé, la variation se trouvant sensiblement au milieu de la durée d'un bit et les valeurs dudit signal en début et en fin de bit étant différentes.

Dans un mode de réalisation particulier, la valeur d'un bit est définie par la présence d'une variation d'un signal codé se trouvant sensiblement au milieu de la durée d'un bit, une variation de synchronisation se trouvant en début ou en fin de la durée dudit bit.

Avantageusement, le nombre prédéterminé de trames redondantes est supérieur à quatre.

Dans un mode de réalisation préférentiel, le dispositif comporte des moyens d'émission pour envoyer les groupes de trames redondantes.

De préférence, les moyens de réception et les moyens d'émission comportent des moyens de transmission radiofréquences.

Avantageusement, les moyens de transmission comportent une antenne imprimée sur un circuit.

Un procédé selon l'invention, comporte :
- une étape d'émission d'un groupe d'un nombre prédéterminé de trames redondantes codées selon un signal différentiel,
- une étape de réception dudit groupe de trames,
- une étape de détection des bits d'information ayant une valeur valide,
- une étape de détermination de bit pour chaque rang de bit en fonction des bits valides du groupe de trames redondantes,

De préférence, les bits d'information déterminés ont les valeurs des bits valides de la valeur majoritaire dans chaque rang.

Avantageusement, l'étape de détection de bits d'information détermine la validité d'un bit en détectant une variation du signal différentiel sensiblement au milieu de la durée dudit bit, le sens de la variation étant représentative de la valeur dudit bit.

Selon une variante, l'étape de détection de bits d'information détermine la validité d'un bit en détectant la présence d'une variation du signal différentiel se trouvant sensiblement au milieu de la durée d'un bit, une variation de synchronisation se trouvant en début ou en fin de la durée dudit bit.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 un dispositif de communication selon un mode de réalisation de l'invention ;
- les figures 2A, 2B et 2C représentent des signaux codés en codage ligne différentiel utilisés dans des dispositifs de communication selon des modes de réalisation de l'invention;
- la figure 3 représente un schéma bloc d'un récepteur d'un dispositif de communication selon un mode de réalisation de l'invention ;
- la figure 4 montre un tableau représentant un groupe de trames, la détection des bits valides, la détermination des valeurs des bits et la reconstitution d'une trame dans un récepteur d'un dispositif de communication selon un mode de réalisation de l'invention ;
- la figure 5 représente des étapes d'un procédé de communication selon un mode de réalisation de l'invention.

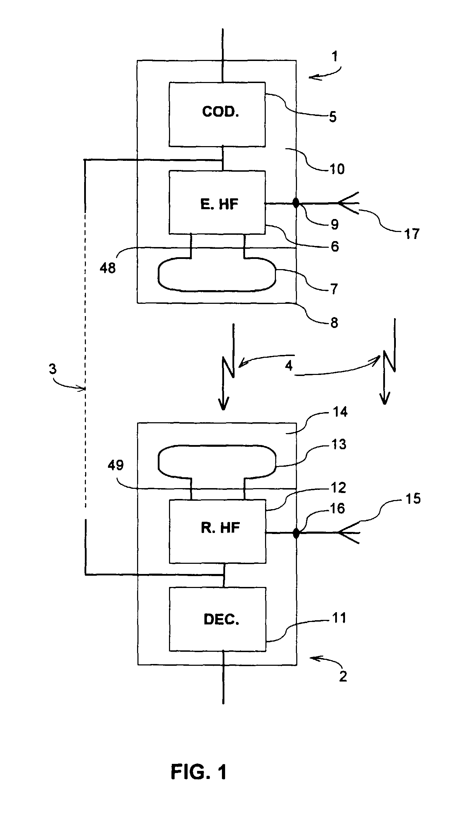

Le dispositif de communication représenté sur la figure 1 comporte un émetteur 1, et un récepteur 2 pouvant être reliés par une ligne filaire 3 ou par une voie hertzienne 4. L'émetteur 1 comporte un dispositif de codage 5 recevant des trames à envoyer et un émetteur radio 6 haute fréquence connecté au dispositif de codage 5. Une sortie de l'émetteur radio haute fréquence est de préférence connectée à une antenne 7 imprimée sur un circuit 8. Le signal haute fréquence peut aussi être appliqué à une sortie 9 d'un circuit 10 comportant ledit émetteur radio 6 pour être envoyé par une antenne extérieure 17. Le récepteur 2 comporte un dispositif de décodage 11 pour décoder le signal reçu et reconstituer les trames de signal. Le décodeur reçoit des signaux fournis par la voie filaire 3 ou par un récepteur radio 12 haute fréquence. Une entrée du récepteur radio 12 est, de préférence, connectée à une antenne 13 imprimée sur un circuit 14. Le signal haute fréquence peut aussi être reçu par une antenne extérieure 15 et appliquée à travers une borne d'entrée 16 au récepteur 12.

Les voies de communications 3 ou 4 pouvant être perturbées, il est important de pouvoir, lors de la réception, détecter et corriger les erreurs qui détériorent l'information reçue. Cependant, les procédés à matrice connus comportant des bits de correction ne sont pas utilisables dans des dispositifs comportant peu de puissance de calcul.

Ainsi, dans un dispositif selon un mode de réalisation de l'invention, les trames sont envoyées par groupes de redondances. Chaque groupe comportant un nombre prédéterminé de trames ayant des bits d'information identiques dans des mêmes rangs. A la réception, un dispositif de détection de bits détecte la validité de chaque bit. Puis, lorsque les bits de même rang sont validés, les valeurs desdits bits de même rang sont utilisées pour déterminer la valeur des bits qui seront utilisés dans un dispositif de traitement ou pour reconstituer une trame de réception. Par exemple, les valeurs majoritaires ayant l'occurrence la plus élevée seront attribuées aux bits de même rang.

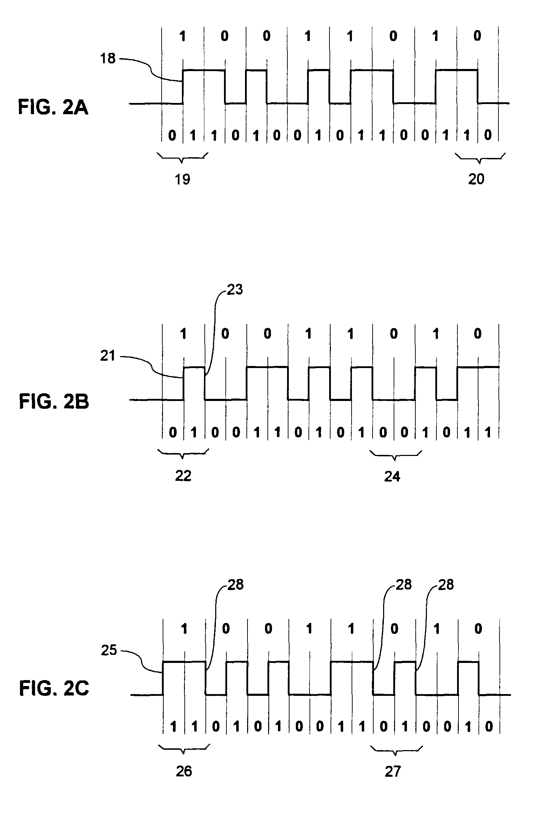

Pour déterminer la validité des bits d'information, des dispositifs selon des modes de réalisation de l'invention utilisent de préférence des signaux en codage ligne différentiel. Ces types de signaux sont connus notamment sous le nom de codage "Manchester, FM1 ou FM0". De tels signaux sont représentés sur les figures 2A, 2B et 2C.

Par exemple, sur la figure 2A, un signal de donnée 18 varie sensiblement au milieu de la durée d'un bit. Ainsi, le signal entre le début et la fin d'un bit est de valeur différente. Le sens de variation détermine la valeur du bit. Pour le premier bit 19 du signal 18, le signal a la valeur 0 au début et la valeur 1 à la fin. Donc, la valeur 1 est attribuée audit bit. Le dernier bit 20 du signal 18 a une valeur 1 au début et une valeur 0 à la fin, une valeur 0 est alors attribuée à ce dernier bit. Si le signal ne varie pas entre le début et la fin, la valeur du bit ne peut être déterminée et le bit sera considéré non valide.

Dans l'exemple de la figure 2B, la valeur d'un bit est déterminée par la présence ou non d'une transition sensiblement au milieu du bit, la validité étant détectée par une transition qui doit se produire en début ou en fin de bit. Dans ce cas, un signal de donnée 21 a une valeur 1 si la valeur du signal varie entre le début et la fin d'un bit d'information. Dans un premier bit 22 du signal 21, une transition est présente, par conséquent la valeur du bit est 1. La valeur du bit étant détectée par la présence obligatoire d'une transition 23 en fin de bit, un dispositif selon un mode de réalisation de l'invention détermine la validité de la valeur du bit en contrôlant la différence de valeur entre la fin d'un bit et le début du bit suivant. Par exemple, entre le premier et le second bit du signal de la figure 2B, le signal passe de l'état 1 à l'état 0. Lorsqu'il n'y a pas de transition sensiblement au milieu du bit, la valeur du bit est 0 comme dans le sixième bit 24 du signal 21.

Sur la figure 2C, un signal a sensiblement les mêmes caractéristiques que le signal 21. Dans ce cas, la valeur 1 est attribuée en absence de transition et la valeur est attribuée en présence d'une transition sensiblement au milieu du bit. Ainsi, le premier bit 26 a une valeur 1 sans transition et le sixième bit 27 a la valeur 0 avec transition. La validité d'un bit est détectée par la présence de transitions 28 entre les bits.

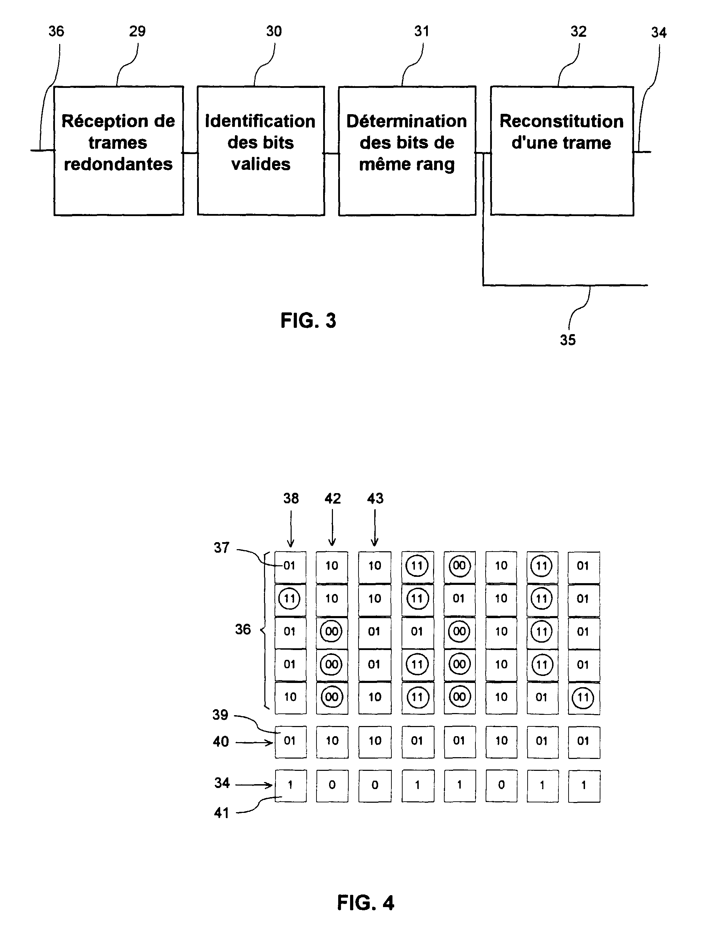

Dans un récepteur 2 d'un dispositif de communication selon un mode de réalisation de l'invention, des trames de signaux sont reçues par groupes de manière redondante. Sur le schéma bloc de la figure 3, le récepteur comporte un module 29 de réception de trames redondantes fournissant un signal codé à un module d'identification 30 des bits valides, et d'un module de détermination 31 relié au module d'identification 30 pour déterminer la valeur des bits ayant un même rang. Ensuite, un module de reconstitution 32 génère une trame 34 en fonction des bits de même rang. Dans ce cas, le groupe de trames redondantes permet de générer une trame valide avec une grande fiabilité. De préférence, le nombre de trames redondantes par groupe est égal ou supérieur à quatre. Dans un mode de réalisation préféré, cinq trames redondantes sont utilisées pour avoir une bonne fiabilité tout en garantissant un débit suffisant d'information. Si la transmission d'un signal est très perturbée et de manière permanente, il est possible qu'aucune trame du groupe soit valide. Le récepteur peut alors fournir un signal 35 de validité ou de non-validité de la trame générée.

Dans l'exemple de la figure 4, un groupe de cinq trames redondantes 36 est utilisé. Chaque trame comporte huit bits codés selon un type de signal 18 représenté sur la figure 2A. Ainsi, dans chaque case, les états en début et fin de bit sont représentés par un couple de valeur. Par exemple, les états 01 du premier bit 37 de la première trame signifie que le signal est d'abord à l'état bas, puis à l'état haut après une transition sensiblement à la moitié de la durée du bit. Dans ce cas, les états 01 d'un bit donnent une valeur valide 1, les états 10 d'un bit donnent une valeur valide 0, et les états 00 ou 11 donnent un bit non valide.

Sur la figure 4, toutes les trames du groupe comportent des bits non valides représentés par des valeurs encerclées. Dans les bits de premier rang 38, les cinq trames redondantes ont donné les signaux 01, 11, 01, 01, 10 soit un bit non valide (11), trois bits 01 et un bit 10. Un récepteur selon un mode de réalisation de l'invention attribuera au bit de chaque rang d'une trame générée à la réception, la valeur des bits majoritaires, c'est-à-dire la valeur ayant la plus grande occurrence parmi les bits valides. Dans le cas du premier rang, le signal 01 apparaît trois fois contre une fois pour le signal 10, le signal est considéré comme étant un 01 (case 39) et la valeur du premier bit de la trame générée 34 est 1 (case 41). La trame générée peut aussi être codée en signal différentiel comme représentée sur la rangée 40.

Dans le deuxième rang 42, trois bits ne sont pas valides (00) et deux bits ont un signal 10, donc le signal généré est 10 et la valeur du bit est 0.

Dans le troisième rang 43, trois bits ont un signal 10 et deux bits ont un signal 01, donc le signal généré est 10 et la valeur 0.

Dans les quatrième, cinquième et septième rangs, un seul bit a un signal valide, donc le signal généré sera identique à celui du bit valide.

Si dans un rang tous les bits sont invalides ou s'il y a égalité de valeur, un signal de validité 35 peut être généré.

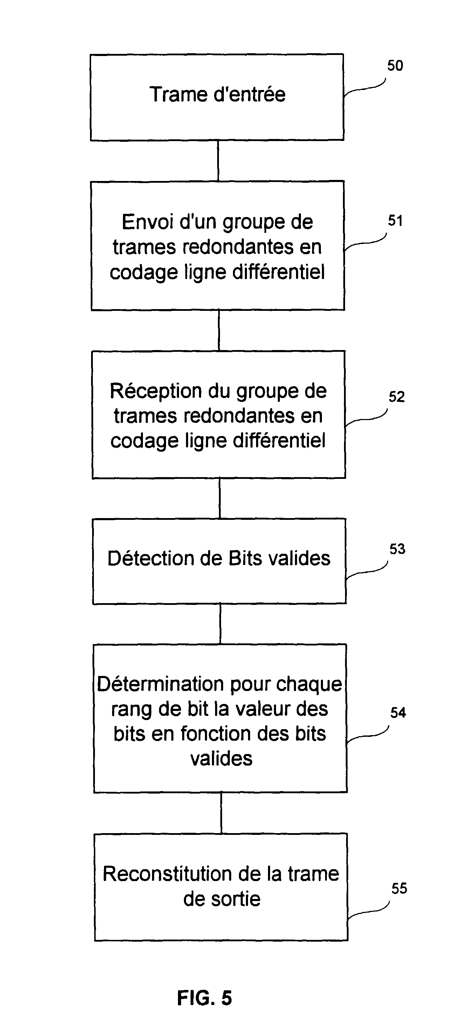

La figure 5 montre un organigramme représentatif d'un procédé selon un mode de mise en oeuvre de l'invention.

Lors d'une étape 50, une première trame à envoyer est générée ou reçue par un émetteur 1. Puis, à une étape 51, des moyens de codage génèrent un groupe de trames redondantes en fonction de la première trame. Par exemple, l'émetteur envoie un nombre prédéterminé de fois la première trame en codage ligne différentiel. Ainsi, l'envoi de trames ayant des bits identiques ne demande pas de moyens de calculs importants.

A une étape 52, le groupe de trames redondantes en codage ligne différentiel est reçu. Puis, à une étape 53, les bits valides de chaque trame sont détectés puis utilisés, lors d'une étape 54, pour déterminer la valeur de chaque bit d'une trame à reconstituer ou à trouver par un dispositif de traitement. Pour chaque rang, la valeur du bit est la valeur majoritaire des valeurs des bits valides.

Enfin, une étape 52 permet de reconstituer une trame en fonction des valeurs majoritaires des bits valides.

Lors de l'émission, les trames redondantes d'un groupe sont, de préférence, toutes identiques, mais il est possible dans d'autres modes de réalisation que certains bits soient différents, notamment des bits de contrôle ou de synchronisation.

Les récepteurs génèrent de préférence des trames de réception, mais il est également possible d'utiliser les bits d'information déterminés directement dans des dispositifs de traitement tels que des microcontrôleurs.

Dans le mode de réalisation de la figure 1, les antennes 7 ou 13 imprimées sur des circuits peuvent être détachées lorsqu'elles ne sont pas utilisées. Par exemple, ces antennes peuvent être, de préférence, situées dans des parties sécables des circuits dont les limites sont représentées par des rainures 48 et 49.

Des dispositifs selon des modes de réalisation de l'invention peuvent comporter sur un même circuit un ou plusieurs émetteurs et/ou un ou plusieurs récepteurs.

## Revendications

1. Dispositif de communication à correction d'erreurs comportant :
- des moyens de réception (2) susceptibles de recevoir des trames dont les bits d'information sont constitués de signaux à codage ligne différentiel (18, 21, 25), et
- des moyens de décodage (11) connectés aux moyens de réception pour décoder lesdites trames de signaux,
dispositif caractérisé en ce que les trames sont groupées par groupes de trames redondantes (36) comportant un nombre prédéterminé de trames dans lesquelles un nombre prédéterminé de bits sont identiques, et en ce qu'il comporte des moyens d'identification (30) pour identifier des bits d'information valides par détection de variation de signal et des moyens de détermination (31) pour déterminer les valeurs des bits d'information en fonction des valeurs des bits d'information valides de rang identique.

2. Dispositif de communication selon la revendication 1, caractérisé en ce que la valeur d'un bit est définie par le sens de variation d'un signal codé (18, 19, 20), la variation se trouvant sensiblement au milieu de la durée d'un bit et les valeurs dudit signal en début et en fin de bit étant différentes.

3. Dispositif de communication selon la revendication 1, caractérisé en ce que la valeur d'un bit est définie par la présence d'une variation d'un signal codé se trouvant sensiblement au milieu de la durée d'un bit (21, 25), une variation de synchronisation se trouvant en début ou en fin de la durée dudit bit.

4. Dispositif de communication selon l'une quelconque des revendications 1 à 3, caractérisé en ce que le nombre prédéterminé de trames redondantes (36) est supérieur à quatre.

5. Dispositif de communication selon l'une quelconque des revendications 1 à 4, caractérisé en ce qu'il comporte des moyens d'émission (1) pour envoyer les groupes de trames redondantes (36).

6. Dispositif de communication selon la revendication 5, caractérisé en ce que les moyens de réception et les moyens d'émission comportent des moyens de transmission radiofréquences (6, 7, 12, 13).

7. Dispositif de communication selon la revendication 6, caractérisé en ce que les moyens de transmission comportent une antenne imprimée sur un circuit (7, 13).

8. Procédé de communication à correction d'erreurs entre des moyens d'émission et des moyens de réception caractérisé en ce qu'il comporte :
- une étape d'émission (51) d'un groupe d'un nombre prédéterminé de trames redondantes codées selon un signal différentiel,
- une étape de réception (52) dudit groupe de trames,
- une étape de détection (53) des bits d'information ayant une valeur valide,
- une étape de détermination (54) de hit d'information pour chaque rang de bit en fonction des bits valides du groupe de trames redondantes,

9. Procédé de communication selon la revendication 8, caractérisé en ce que l'étape de détection de bits d'information détermine la validité d'un bit en détectant une variation du signal différentiel (18, 19, 20) sensiblement au milieu de la durée dudit bit, le sens de la variation étant représentative de la valeur dudit bit.

10. Procédé de communication selon la revendication 8, caractérisé en ce que l'étape de détection de bits d'information détermine la validité d'un bit en détectant la présence d'une variation du signal différentiel (21-27) se trouvant sensiblement au milieu de la durée d'un bit, une variation de synchronisation se trouvant en début ou en fin de la durée dudit bit.
